# EUROPÄISCHE PATENTSCHRIFT

(11) **EP 0 908 404 B1**
(45) Veröffentlichungstag und Bekanntmachung des Hinweises auf die Patenterteilung: **08.01.2003**
(21) Anmeldenummer: 98118903.8
(22) Anmeldetag: 07.10.1998
(51) Int. Cl.: B65G 67/06, G01G 13/24, G06F 17/60

(54) **Verladestation für Schüttgut**
Loading station for bulk material
Poste de chargement pour matière en vrac

(30) Priorität: 13.10.1997 DE 19744980
(43) Veröffentlichungstag der Anmeldung: 14.04.1999
(73) Patentinhaber: Karl Schmidt Spedition GmbH & Co., 74076 Heilbronn (DE)
(72) Erfinder: Heyd, Marco, 74078 Heilbronn (DE)
(74) Vertreter: Patentanwalts-Partnerschaft, Rotermund + Pfusch + Bernard

(56) Entgegenhaltungen:
- WO-A-97/28985

## Beschreibung

Die Erfindung betrifft eine Verladestation für Schüttgut nach dem Merkmal (a) des Patentanspruchs 1.

Eine solche Verladestation ist aus WO 97/28985 bekannt. Dort ist ein Rechner vorgesehen, an dem ein zu beladendes Fahrzeug sich fahrzeugspezifisch durch Einlesen einer die Fahrzeugdaten enthaltenden Magnetkarte identifizieren kann. In diesen Rechner werden weiterhin die Ladedaten, das heißt die Art und das Gewicht des zu ladenden Gutes, eingegeben. Anhand der eingegebenen Ladedaten steuert dieser Rechner den Ladevorgang. Die in den Rechner eingegebenen Ladedaten werden auf der Magnetkarte gespeichert, um das Fahrzeug später mit Hilfe dieser Daten definiert entladen zu können. Bei dieser bekannten Verladestation muss einzelnen Silos bzw. Silogruppen jeweils ein eigenständiger Rechner zugeordnet werden, wodurch bei einer größeren Ladestation eine Vielzahl solcher Rechner eingesetzt werden muss.

Die Erfindung beschäftigt sich mit dem Problem, den Aufbau einer Verladestation rationeller, das heißt insbesondere kostengünstiger aufgebaut, und betriebssicherer zu gestalten.

Die Erfindung beruht dabei auf dem allgemeinen Gedanken, ein Schüttgut-Transportfahrzeug, das automatisch nach Vorgabe der Schüttgutart und des Schüttgutgewichtes beladen werden kann, mit lediglich einen einzigen Rechner in der Verladestation, unabhangig davon, welchen Silo bzw. welche Silogruppe aus einer Vielzahl solder ein der Verladestation vorhandenen Silos bzw. Silogruppen angefahren werden soll, sicher beladen zu Können. Dabei soll die Einrichtung derart aufgebaut sein, daß einerseits eine Falschbeladung und andererseits auch ein ungewollter Schüttgutauslauf aus Silo-Behältern der Verladestation jeweils sicher ausgeschlossen bleiben. Durch den Einsatz ledig lich eines einzigen Rechner ergibt sich eine hohe Flexibilität für den Anlagebetriebs, geringer Wortungs aufwand und eine besonders hohe Betriebs sicher heit.

Zweckmäßige Ausgestaltungen der Erfindung sind Gegenstand der Unteransprüche.

Ein Ausführungsbeispiel, anhand dessen die Erfindung noch im einzelnen erläutert wird, ist in der Zeichnung dargestellt.

Es zeigen
- Fig. 1: eine schematische Darstellung einer Schüttgut-Verladestation mit einer mobilen Wiegeeinrichtung,
- Fig. 2: einen Schaltplan für eine Schüttgut-Verladestation.

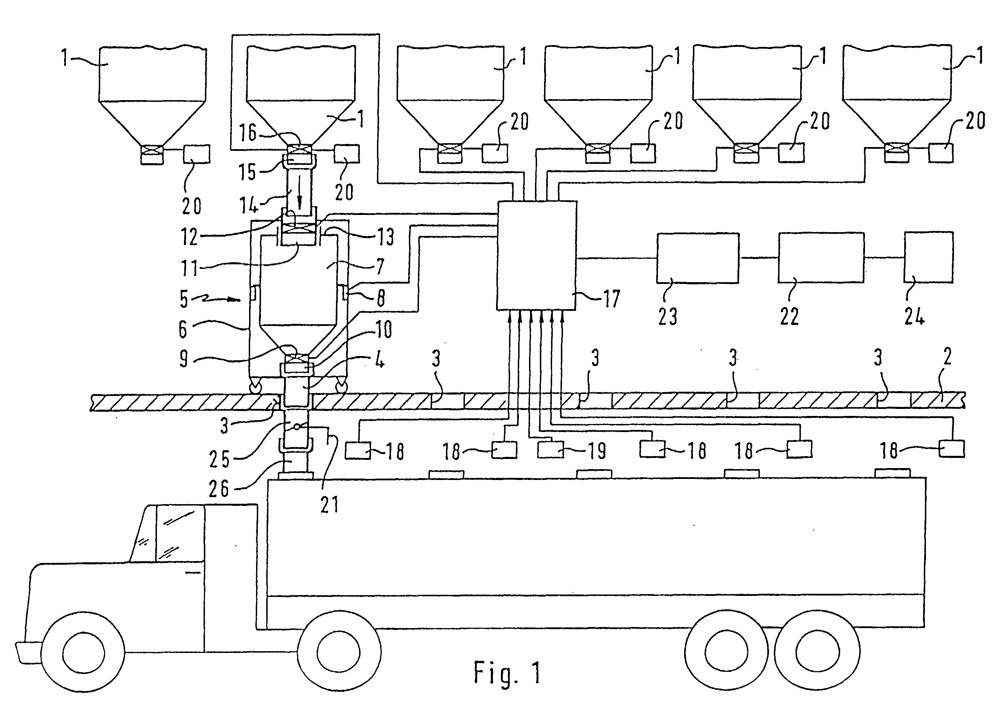

Die Fig. 1 zeigt lediglich einen Ausschnitt aus einer aus insgesamt einer erheblich größeren Anzahl an Schüttgut-Silo-Behältern bestehenden Schüttgut-Verladestation. Eine solche Verladestation erstreckt sich im Prinzip über drei Ebenen. In der oberen Ebene sind die Silo-Behälter 1 vorgesehen, von denen in einer Anlage eine Vielzahl enthalten sind. In der untersten Ebene ist ein Fahrbereich für Transportfahrzeuge zum Befüllen mit Schüttgut gegeben. Zwischen diesen beiden Ebenen befindet sich eine Verladebühne 2 mit abdeckbaren Öffnungen 3, aus denen das Schüttgut über teilweise elastische Verbindungsrohre 4, 25, 26 in eine zugeordnete Aufnahmeöffnung eines Transportfahrzeuges eingeführt wird.

Zwischen den Öffnungen 3 der Verladebühne 2 und den Auslaßöffnungen der Silo-Behälter 1 liegt der Einsatzbereich für eine Wiegeeinrichtung 5.

Eine solche Wiegeeinrichtung 5 kann wie folgt aufgebaut sein. In einem auf der Verladebühne 2 verfahrbaren Fahrgestell 6 ist ein Wiegebehälter 7 lotrecht beweglich gelagert. In dem Lagerbereich befindet sich eine an sich bekannte Gewichtsmeßeinrichtung 8, mit der das Gewicht des Wiegebehälters 7 bestimmt werden kann. Die Gewichtsmeßeinrichtung 8 ist in an sich bekannter Weise derart ausgebildet, daß in jeweils kurzen Zeitabschnitten laufend hintereinander Gewichtsmessungen durchgeführt werden können. Die Zeitabschnitte können beispielsweise lediglich 0,25 s betragen.

Der Wiegebehälter 7 ist an seinem unteren Auslaufende mit einem Auslaufventil 9 versehen. Dieses Auslaufventil 9 ist fest mit dem Wiegebehälter 7 verbunden. Der Auslaufstutzen 10 des Wiegebehälters 7 ragt in ein aufgesetztes elastisches Verbindungsrohr 4, das in eine Öffnung 3 in der Verladebühne 2 einsetzbar ist.

An dem lotrecht oberen Ende des Wiegebehälters 7 befindet sich ein Zulaufstutzen 11 mit einem Zulaufventil 12. Dieser Zulaufstutzen 11 ist zusammen mit dem Zulaufventil 12 fest an dem Traggestell 6 befestigt, so daß zwischen dem Stutzen 11 und einer Abdeckung 13 des Wiegebehälters Relativbewegungen möglich sind. Der Stutzen 11 ist über ein weiteres Verbindungsrohr 14 aus biegsamem Material mit dem Auslaufstutzen 15 eines Silo-Behälters 1 verbunden. In dem Auslaufstutzen 15 eines jeden Silo-Behälters 1 ist ein Auslaufventil 16 vorhanden.

Die Zu- und Ablaufventile 12 und 9 der Wiegeeinrichtung, das Auslaufventil 16 der Silo-Behälter 1 und die Gewichtsmeßeinrichtung 8 sind jeweils durch elektrische Leitungen über eine von insgesamt mehreren Schaltstationen 17 mit einem Prozeßrechner 23 verbunden. Dieser Prozeßrechner 23 erlaubt speicherprogrammierbare Steuerungen. An einen Prozeßrechner angeschlossen ist ferner eine elektronische Daten-Eingabestation 22, die wiederum mit einem Magnetkartenschreiber 24 verbunden ist.

Mit jeder Schaltstation 17 sind zusätzlich noch verbunden ein Start-Schalter 18, der in dem Fahrbereich von beispielsweise dem Fahrer eines Transportfahrzeuges bedienbar ist. Von dem gleichen Bereich aus führt ein Magnetkartenleser 19 in die Schaltstation 17. Ferner kann in die Schaltstation 17 ein Schloßschalter integriert sein, über den bestimmte Steuersignale der Schaltstation 17 gesperrt bzw. freigegeben werden können. Dieser Schloßschalter ist, wenn er vorgesehen ist, nur mit einem mechanischen Schlüssel oder einem elektronischen Code betätigbar.

Eine Schaltstation 17 ist jeweils mehreren Silo-Behältern 1 zugeordnet und jeweils über Steuerleitungen mit deren Auslaufventilen 16 verbunden. Bei dem Ausführungsbeispiel nach Fig. 1 sind einer Schaltstation 17 fünf Silo-Behälter 1 zugeordnet. In gleicher Anzahl führen Start-Schalter 18 in die Schaltstation 17, wobei jeder Start-Schalter eine Öffnung 3 zum Durchlassen von Schüttgut in der Verladebühne zugeordnet ist. Den fünf Silo-Behältern ist insgesamt ein Magnetkartenleser 19 zugeordnet, der mit einer Schaltstation 17 in der weiter oben beschriebenen Weise verbunden ist.

Jede Schaltstation 17, von denen bei einer Zuordnung zu jeweils fünf Silo-Behältern bei beispielsweise dreißig Silo-Behältern insgesamt sechs vorgesehen sind, ist vorzugsweise ortsfest auf der Verladebühne 2 montiert. Die Wiegeeinrichtung 5 kann mit ihren Steuer- und Meßleitungen über eine einfache Steckverbindung an eine jeweils zugeordnete Schaltstation 7 angeschlossen und von dieser getrennt werden.

Bei einer Verladeeinrichtung mit einer Vielzahl von Silo-Behältern 1 kann zweckmäßigerweise jeweils fünf in Reihe liegenden Silo-Behältern 1 eine Schaltstation 17 zugeordnet sein. Die Anzahl fünf resultiert dann daraus, daß ein Transportfahrzeug üblicherweise eine Länge besitzt, die sich insgesamt auf etwa einen Abschnitt mit fünf hintereinander liegenden Öffnungen 3 der Verladebühne 2 erstreckt.

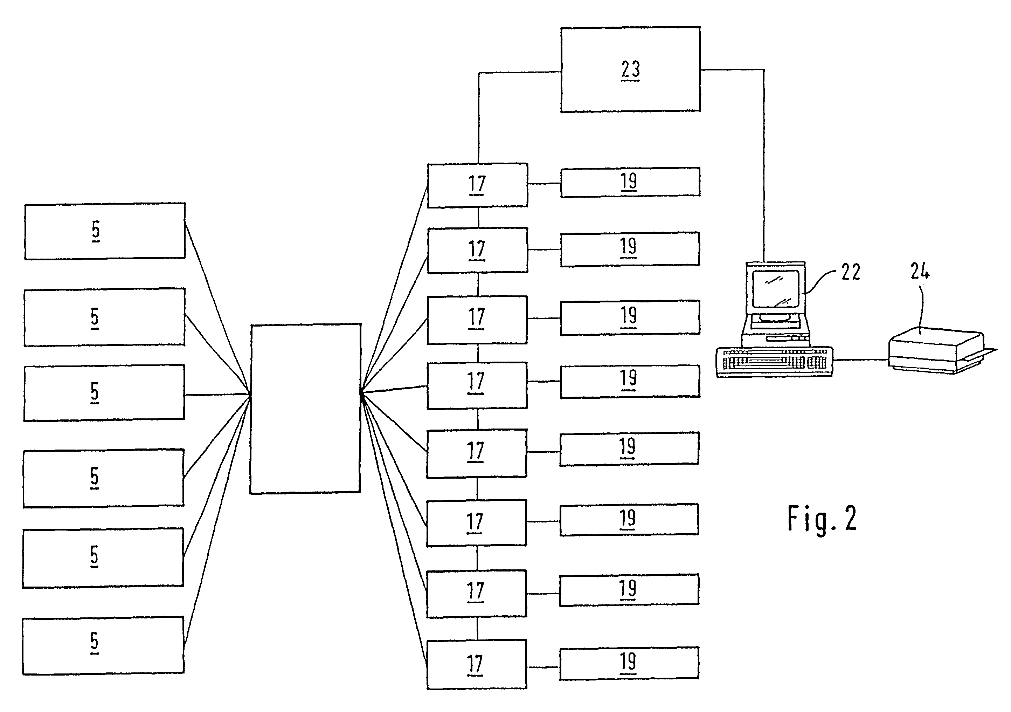

In der Fig. 2 ist in einem Schaltschema dargelegt, wie verschiedene gleichartige Wiegeeinrichtungen 5 unterschiedlichen Schaltstationen 17 zugeordnet werden können. Sämtliche Schaltstationen 17 sind wiederum gemeinsam an einen Prozeßrechner 23 angeschlossen, mit dem die Eingabestation 22 datenführend verbunden ist. Jede der Schaltstationen 17 ist mit einem eigenen Magnetkartenleser 19 verbunden. Aus Sicherheitsgründen können die Auslaufventile 16 der Silobehälter 1 durch einen schloßgesicherten Sperrschalter (20), der ausschließlich von Hand außerhalb des automatischen Steuerprozesses bedienbar ist, gegen ein ungewolltes Öffnen geschützt sein. Durch die Schloßsicherung ist der Sperrschalter 20 lediglich über einen mechanischen Schlüssel oder einen elektronischen Code betätigbar. Für jeden Silobehälter 1 kann beispielsweise ein spezieller Schlüssel oder Code erforderlich sein.

Eine Verladestation mit einer Wiegeeinrichtung, wie sie beispielsweise vorstehend beschrieben ist, funktioniert wie folgt.

Ein an der Verladestation ankommender Transportwagenfahrer meldet sich bei einem Disponenten an der Eingabestation 22. Der Disponent gibt in die Eingabestation 22 den Transportauftrag datenmäßig ein, wobei er insbesondere die Verlademenge, den Silo-Behälter 1 mit dem zu verladenden Schüttgut und die Zeit, die für ein Verladen vorgesehen ist, eingibt.

Die Verlademenge, die Silo-Behälter- und die Zeitangabe werden von dem Eingabegerät 22 an den Prozeßrechner 23 geleitet. Aus dem Magnetkartenschreiber 24 erhält der Transportwagenfahrer eine Magnetkarte, auf der die ihm zugeteilte Verladezeit und die Nummer des Silo-Behälters 1, von dem er Schüttgut erhalten soll, codiert angegeben sind.

Hat der Fahrer sein Transportfahrzeug in der Verladestation unterhalb des ihm angewiesenen Silo-Behälters 1 abgestellt, kann er innerhalb der ihm zugewiesenen Verladezeit das Schüttgut aufnehmen.

Durch Einlegen seiner Magnetkarte in den Magnetkartenleser 19 ist in der zugehörigen Schaltstation 17 erkennbar, aus welchem Silo-Behälter 1 Schüttgut in das Transportfahrzeug eingefüllt werden soll. Die Wiegeeinrichtung 5 wird von einer Bedienungsperson auf der Verladebühne 2 mit dem betreffenden Silo-Behälter 1 verbunden, wozu das biegsame Rohr 14 eine Verbindung zwischen dem Auslaufstutzen 15 des Silo-Behälters 1 und dem Zulaufstutzen 11 des Wiegebehälters 7 bildet. Von dem Auslaufstutzen 10 des Wiegebehälters 7 wird ein biegsames Rohr 4 in eine Öffnung 3 der Verladebühne 2 geführt. Des weiteren werden die Steuer- und Meßleitungen der Wiegeeinrichtung 5 über einen Steckanschluß mit der jeweiligen Schaltstation 17 verbunden.

Über einen Start-Schalter 18 könnte die Schüttgutverladung nunmehr im Prinzip von dem Fahrer eingeleitet werden. Aus Sicherheitsgründen ist dies allerdings erst dann möglich, wenn die Bedienperson auf der Verladebühne 2 den schloßgesicherten Sperrschalter 20 an dem vorgegebenen Silobehälter 1 betätigt hat. Bei einem unbetätigten Sperrschalter 20 ist kein Öffnen eines Auslaufventiles 16 eines Silo-Behälters 1 möglich.

Ist über den Sperrschalter 20 das Auslaufventil 16 eines Silo-Behälters 1 zum Öffnen ansteuerbar geschaltet, kann der Fahrer über einen der Start-Schalter 18 die Schüttgutverladung und damit den Wiegeprozeß durch ein Öffnen des betreffenden Silo-Behälter-Auslaufventils 16 einleiten. Ist der Verladeprozeß entsprechend eingeleitet, wird bei einem geschlossenen Auslaufventil 9 des Wiegebehälters 7 und bei geöffnetem Zulaufventil 12 des Wiegebehälters das Auslaufventil 16 des zugehörigen Silo-Behälters 1 geöffnet. Damit kann Schüttgut in den Wiegebehälter 7 einströmen. Während des Einströmvorganges wird laufend das Gewicht des sich füllenden Wiegebehälters 7 in Zeitabständen von etwa 0,25 s gemessen. Die Füllmenge für einen Füllvorgang des Wiegebehälters 7 ist als Soll-Wert elektronisch in dem Prozeßrechner 23 vorgegeben. Sobald der Soll-Wert für eine einzelne Füllung des Wiegebehälters 7 erreicht ist, schließt das Zulaufventil 12 des Wiegebehälters 7 bei geöffnet bleibendem Auslaufventil 16 des Silo-Behälters 1. Nach dem Schließen des Zulaufventiles 12 öffnet das Auslaufventil 9 des Wiegebehälters 7, wodurch das Schüttgut in das Transportfahrzeug einströmen kann. In dem von der Verladebühne 2 zum Transportfahrzeug führenden Verbindungsrohr 25 ist ein von dem Fahrer des Transportfahrzeuges per Hand bedienbares Klappenventil 21 vorgesehen, durch das der Schüttgutausfluß aus dem Verbindungsrohr 25 jederzeit unterbrochen und aktiviert werden kann.

Nach vollständiger Entleerung des Wiegebehälters 7 erfolgt ein erneuter Füllvorgang bei geschlossenem Auslaufventil 9 und geöffnetem Zulaufventil 12. Die Gewichtsmessung erfolgt in der mit der Schaltstation 17 datenübertragend verbundenen Meßeinrichtung 8. Die Füllgewichte der einzelnen Füllvorgänge werden elektronisch aufsummiert bis eine beispielsweise in der Eingabestation 22 dem Prozeßrechner 23 vorgegebene Gesamtfüllmenge gewichtsmäßig erreicht ist. Sobald die vorgegebene Gesamtfüllmenge tatsächlich erreicht ist, schließt das Auslaufventil 16 des betreffenden Silo-Behälters 1.

Da der Zulaufstutzen 11 mit dem Zulaufventil 12 des Wiegebehälters 7 getrennt von dem Wiegebehälter in dem Tragegestell 6 der Wiegeeinrichtung 5 gelagert ist, wird das in dem biegsamen Verbindungsrohr 14 befindliche Schüttgut nicht gewichtsmäßig durch die Meßeinrichtung 8 erfaßt. Dennoch wird das Schüttgut in dem Verbindungsrohr 14 nach Abschluß der Gewichtsmessung in den Wiegebehälter 7 noch eingegeben. Ohne Berücksichtigung dieser Nachfüllmenge ergäbe sich ein unkorrekter Gesamt-Gewichtswert. Um dies zu vermeiden, wird die Nachfüllmenge in dem Verbindungsrohr 14 bei der Vorgabe des Soll-Gewichtswertes in den Prozeßrechner 23 durch eine entsprechende Reduzierung des Gewichts-Vorgabewertes berücksichtigt.

Durch die Trennung des Zulaufstutzens 11 mit dem Zulaufventil 12 von dem Wiegebehälter 7 kann die Gewichtsmessung innerhalb des Wiegebehälters 7 von Strömungseinflüssen innerhalb des Verbindungsrohres 14 unbeeinflußt bleiben.

Ein besonderer Vorteil der erfindungsgemäßen Verladestation sowie des Verfahrens, mit dem diese betrieben wird, besteht darin, daß das Transportfahrzeug automatisch mit der vorgegebenen Füllmenge beladen wird, wobei eine äußerst hohe Meßgenauigkeit erreicht wird. Dabei kann der Beladevorgang bei dem Transportfahrzeug durch dessen Fahrer durch Betätigen der Klappenventile 21 jederzeit unterbrochen werden, ohne daß hierdurch die Meßgenauigkeit in irgendeiner Form leidet. Denn während des Ausströmens des Schüttgutes in das Transportfahrzeug erfolgt keine Messung, so daß diese durch eine Unterbrechung des Schüttgutstromes auch nicht beeinflußt werden kann. Eine Unterbrechung des Schüttgutstromes aus dem Wiegebehälter 7 durch den Fahrer des Transportfahrzeuges kann notwendig sein, wenn das Fahrzeug zur Verteilung des Schüttgutes innerhalb des Fahrzeuges über mehrere Öffnungen beladen werden muß. Dann ist es nämlich möglich, daß der Laderaum unter einer Öffnung während eines Füllvorganges vollständig ausgefüllt wird, so daß das Fahrzeug zum Einfüllen des Schüttgutes in eine benachbarte Öffnung verfahren werden muß.

Die beschriebene Wiegeeinrichtung ist lediglich ein Beispiel für eine einsetzbare Wiegeeinrichtung, die grundsätzlich vollkommen andersartig aufgebaut sein kann. Auch die Funktion der Wiegeeinrichtung kann andersartig sein. Im Rahmen der vorliegenden Erfindung muß die Wiegeeinrichtung lediglich mobil und an Schaltstationen 17 mindestens zur Gewichtsdatenübertragung anschließbar sein.

## Patentansprüche

1. Verladestation für Schüttgut mit
(a) einer Vielzahl an das Schüttgut enthaltenden Silo-Behältern mit jeweils einem Auslaufventil in einem oberen Bereich der Station, einem unten liegenden Fahrbereich für Schüttgut-Transportfahrzeuge, einer höhenmäßig zwischen diesen beiden Bereichen liegenden Verladebühne mit verschließbaren Durchgangsöffnungen für zu verladendes Schüttgut und einer auf der Zwischenbühne mobilen Wiegeeinrichtung zur Gewichtsbestimmung des aus einem der Silo-Behälter in ein Transportfahrzeug zu ladenden Schüttgutes, und
mit folgenden weiteren Merkmalen,
(b) es ist ein Prozeßrechner (23) vorgesehen, der zur Aufnahme von mindestens Angaben über ein in ein Transportfahrzeug zu verladendes Schüttgutgewicht und die Bezeichnung des zur Ausgabe des Schüttgutes bestimmten Silo-Behälters (1) mit einer elektronischen Eingabestation (22) verbunden ist,
(c) an die elektronische Eingabestation (22) ist ein Magnetkartendrucker (24) angeschlossen, welcher eine Magnetkarte mit zumindest einer Angabe zur Bezeichnung des zur Ausgabe bestimmten Silo-Behälters (1) ausdruckt,
(d) der Prozeßrechner (23) dient zur Steuerung der Schüttgutausgabe aus dem ihm jeweils vorgegebenen Silo-Behälter (1),
(e) die Wiegeeinrichtung (5) besitzt eine Gewichtsmeßvorrichtung (8) zur Ermittlung des zu verladenden Schüttgutgewichtes,
(f) die Gewichtsmeßvorrichtung (8) ist zur Übertragung der ermittelten Meßdaten an den Prozeßrechner (23) angeschlossen, der zur Ermittlung des Gesamtgewichtes des tatsächlich zu verladenden Schüttgutes durch Vergleich mit dem ihm vorgegebenen Soll-Ladegewicht programmiert ist,
(g) das dem Prozeßrechner (23) zur Steuerung der Schüttgutausgabe eingegebene Programm erlaubt ein Verschließen des Auslaufventiles (16) des das Schüttgut spendenden Silo-Behälters (1) bei Erreichen des als Sollwert vorgegebenen Schüttgut-Verladegewichtes,
(h) der Prozeßrechner (23) ist mit einzelnen Schaltstationen (17) verbunden, die als Verteiler für Steuer-, Meß- und Eingabeleitungen dienen,
(i) an die Schaltstationen (17) sind angeschlossen die Steuerleitungen der Auslaufventile (16) jeweils einer Gruppe von Silo-Behältern (1), ein einer Silo-Behältergruppe zugeordneter Magnetkartenleser (19), welcher die von der elektronischen Eingabestation (22) ausgedruckte Magnetkarte liest, und ein Schalter (18) zum Öffnen eines Silo-Behälter-Auslaufventiles (16),
(k) jede Schaltstation besitzt ferner Anschlüsse für Datenübertragungsleitungen zu der Wiegeeinrichtung (5) mit der an dieser vorgesehenen Gewichtsmeßvorrichtung (8).

2. Verladestation nach Anspruch 1,
**dadurch gekennzeichnet,**
**daß** der Prozeßrechner (23) zur Aufnahme eines für einen Verladevorgang vorgebbaren Zeitraumes durch die Eingabestation (22) programmiert ist und daß der Magnetkartendrucker (24) auf den auszudruckenden Magnetkarten einen Zeitraum für eine Schüttgutverladung codiert.

3. Verladestation nach Anspruch 1 oder 2,
**dadurch gekennzeichnet,**
**daß** ein Öffnen der Auslaufventile (16) der Silobehälter (1) durch einen ausschließlich unabhängig von der Prozeßsteuerung betätigbaren Sicherheitssperrschalter (20) freigegeben sein muß.

4. Verladestation nach einem der vorhergehenden Ansprüche,
**dadurch gekennzeichnet,**
**daß** an jeder Öffnung (3) der Verladebühne (2) ein Schalter (18) zum Öffnen der Silo-Behälter-Auslaufventile (16) vorgesehen ist.

5. Verladestation nach einem der vorhergehenden Ansprüche,
**dadurch gekennzeichnet,**
**daß** die Wiegeeinrichtung (5) für ein schubweises Wiegen des zu verladenden Schüttgutes ausgestaltet ist und einen Wiegebehälter (7) mit von dem Prozeßrechner (23) steuerbaren Zuund Auslaufventilen (12, 9) besitzt.

6. Verladestation nach einem der vorhergehenden Ansprüche,
**dadurch gekennzeichnet,**
**daß** stromab der Wiegeeinrichtung (5) ein von dem Fahrer eines Transportfahrzeuges bedienbares Sperrventil (21) für den Schüttgut-Verladestrom vorgesehen ist.

## Claims

1. Loading station for bulk material with
(a) a multiplicity of silo containers containing the bulk material, with in each case an outlet valve in an upper area of the station, a driving area, located below, for bulk material transport vehicles, a loading platform, located in terms of height between these two areas, with closable through orifices for bulk material to be loaded and a weighing device, mobile on the intermediate platform, for determining the weight of the bulk material to be loaded from one of the silo containers into a transport vehicle and with the following further features:
(b) a process computer (23) is provided, which is connected to an electronic input station (22) for recording at least data on a weight of bulk material to be loaded into a transport vehicle and the designation of the silo container (1) intended for output of the bulk material,
(c) connected to the electronic input station (22) is a magnetic card printer (24), which prints out a magnetic card with at least one datum to designate the silo container (1) intended for output,
(d) the process computer (23) serves to control the output of bulk material from the silo container (1) preset for it in each case,
(e) the weighing device (5) has a weight measuring device (8) for determining the weight of bulk material to be loaded,
(f) the weight measuring device (8) is connected for transfer of the determined measured data to the process computer (23), which is programmed for determining the total weight of the bulk material actually to be loaded by comparison with the desired loading weight preset for it,
(g) the program input in the process computer (23) for controlling the output of bulk material allows the outlet valve (16) of the silo container (1) dispensing the bulk material to be closed when the bulk material loading weight, preset as a desired value, is reached,
(h) the process computer (23) is connected to individual switching stations (17) which act as distributors for control, measuring and input lines,
(i) connected to the switching stations (17) are the control lines of the outlet valves (16) of in each case one group of silo containers (1), a magnetic card reader (19), allocated to a group of silo containers, which reads the magnetic card printed out by the electronic input station (22), and a switch (18) for opening a silo container outlet valve (16),
(k) each switching station further has connections for data transfer lines to the weighing device (5) with the weight measuring device (8) provided on it.

2. Loading station according to claim 1, **characterised in that** the process computer (23) is programmed for recording a period of time, which can be preset for a loading procedure, by the input station and the magnetic card printer (24) codes a period of time for a loading of bulk material on the magnetic cards to be printed out.

3. Loading station according to claim 1 or 2, **characterised in that** opening of the outlet valves (16) of the silo containers (1) must be released by a safety stop switch (20), which can be actuated only independently of the process control.

4. Loading station according to any one of the preceding claims, **characterised in that** a switch (18) for opening the silo container outlet valves (16) is provided on each orifice (3) of the loading platform (2).

5. Loading station according to any one of the preceding claims, **characterised in that** the weighing device (5) is configured for weighing the bulk material to be loaded in batches and has a weighing container (7) with inlet and outlet valves (12, 9) controllable by the process computer (23).

6. Loading station according to any one of the preceding claims, **characterised in that** upstream the weighing device (5) a stop valve (21) for the bulk material loading flow is provided, which can be operated by the driver of a transport vehicle.

## Revendications

1. Station de chargement pour matière en vrac comportant
(a) une pluralité de silos contenant la matière en vrac comportant respectivement une vanne de sortie dans une zone supérieure de la station, une zone de déplacement pour véhicules de transport de matière en vrac située en bas, une plate-forme de chargement située, pour la hauteur, entre ces deux zones, comportant des ouvertures de passage obturables pour la matière en vrac à charger et un dispositif de pesage mobile sur la plate-forme de chargement pour déterminer le poids d'une matière en vrac à charger, de l'un des silos, dans un véhicule de transport, et présentant les autres caractéristiques ci-après,
(b) il est prévu un calculateur (23), qui est relié à une station de saisie électronique (22) pour recevoir au moins des indications sur un poids de matière en vrac à charger dans un véhicule de transport et la désignation du silo (1) défini pour la distribution de la matière en vrac,
(c) à la station de saisie électronique (22) est connectée une imprimante de cartes magnétiques (24), laquelle imprime une carte magnétique comportant au moins une indication sur la désignation du silo (1) prévu pour la distribution,
(d) le calculateur (23) sert à commander la distribution de matière en vrac du silo qui lui a respectivement été indiqué,
(e) le dispositif de pesage (5) possède un dispositif de mesure de poids (8) pour déterminer le poids de la matière en vrac à charger,
(f) pour transmettre les données de mesure déterminées, le dispositif de mesure de poids (8) est connecté au calculateur (23), qui est programmé pour déterminer le poids total de la matière en vrac à charger effectivement, par comparaison au poids de chargement de consigne qui lui est indiqué,
(g) le programme chargé sur le calculateur (23) pour commander la distribution de matière en vrac permet une fermeture de la vanne de sortie (16) du silo (1) distribuant la matière en vrac, une fois atteint le poids de chargement de matière en vrac indiqué en tant que valeur de consigne,
(h) le calculateur (23) est relié à diverses stations de commutation (17), qui servent de répartiteur pour les lignes de commande, de mesure et de saisie,
(i) aux stations de commutation (17) sont connectées les lignes de commande des vannes de sortie (16) de respectivement un groupe de silos (1), un lecteur de cartes magnétiques (19) affecté à un groupe de silos, lequel lit la carte magnétique imprimée par la station de saisie électronique (22), et un commutateur (18) pour ouvrir une vanne de sortie de silo (16),
(k) chaque station de commutation possède par ailleurs des connexion pour des lignes de transmission de données vers le dispositif de pesage (5) avec le dispositif de mesure de poids (8) prévu sur celui-ci.

2. Station de chargement selon la revendication 1, **caractérisée en ce que** le calculateur (23), pour recevoir une plage chronologique pouvant être indiquée pour un chargement, est programmé par la station de saisie (22) et **en ce que** sur les cartes magnétiques à imprimer, l'imprimante de cartes magnétiques (24) code une plage chronologique pour un chargement de matière en vrac.

3. Station de chargement selon la revendication 1 ou 2, **caractérisée en ce qu'**une ouverture des vannes de sortie (16) des silos (1) doit être validée par un commutateur de blocage de sûreté (20) ne pouvant être actionné qu'indépendamment de la commande du procédé.

4. Station de chargement selon l'une des revendications précédentes, **caractérisée en ce que** sur chaque ouverture (3) de la plate-forme de chargement (2) est prévu un commutateur (18) pour ouvrir les vannes de sortie de silo (16).

5. Station de chargement selon l'une des revendications précédentes, **caractérisée en ce que** le dispositif de pesage (5) est conçu pour un pesage fractionné de la matière en vrac à charger et un conteneur de pesage (7) possède des vannes d'alimentation et de sortie (12, 9) pouvant être commandées par le calculateur (23).

6. Station de chargement selon l'une des revendications précédentes, **caractérisée en ce que**, en aval du dispositif de pesage (5), est prévue une vanne d'arrêt (21) pour le flux de chargement de matière en vrac pouvant être pilotée par le conducteur d'un véhicule de transport.
